# FASCICULE DE BREVET EUROPEEN

(11) **EP 1 434 447 B1**
(45) Date de publication et mention de la délivrance du brevet: **07.12.2005**
(21) Numéro de dépôt: 03293175.0
(22) Date de dépôt: 16.12.2003
(51) Int. Cl.: H04Q 7/22

(54) **Diffusion d'une information dans un réseau de radiocommunication**
Nachrichtenrundfunksystem in einem Funkkommunikationsnetz
Information broadcasting method in a radio communication network

(30) Priorité: 24.12.2002 FR 0216611
(43) Date de publication de la demande: 30.06.2004
(73) Titulaire: ALCATEL, 75008 Paris (FR)
(72) Inventeur: Sykes, Francis, 75014 Paris (FR); Lievin, Jean-Louis, 75012 Paris (FR)
(74) Mandataire: Sciaux, Edmond

(56) Documents cités:
- WO-A-01/93505

## Description

La présente invention concerne un procédé de diffusion d'information dans un réseau de radiocommunication. L'invention concerne également un dispositif pour mettre en oeuvre ce procédé.

Un des domaines d'application, non exclusif, de l'invention est celui des terminaux mobiles de radiocommunication fonctionnant dans un réseau de radiocommunication cellulaire. Ces terminaux sont utilisés par des abonnés au réseau. Un opérateur gère les connexions des abonnés au réseau.

L'invention s'applique notamment, mais non exclusivement, à un système selon le standard GSM (Groupe spécial Systèmes Mobiles publics de radiocommunication).

Le développement important des systèmes de radiocommunication pose le problème de la transmission de données de plus en plus volumineuses. En effet, si la transmission de la voix nécessite quelques dizaine de kilooctets, la transmission d'une image nécessite quelques centaine de kilooctets et la transmission d'un clip vidéo nécessite quelques centaines de mégaoctets.

Ainsi ces données, telles que des images, du son ou les deux, nécessitent une importante capacité de réseau et de bande passante pour être transmises aux terminaux des abonnés du réseau.

Lorsqu'une donnée de ce type doit être transmise à plusieurs abonnés au réseau au même instant, l'opérateur doit utiliser autant de canaux que d'abonnés. Ceci provoque le problème de monopoliser une grande bande passante du réseau au détriment des transmissions des communications uniquement de voix entre les autres abonnés au réseau.

Une solution connue (WO 01 93505) est de fournir deux types de canaux de transmission différents. Le premier type de canal est apte à transmettre les communications (voix). Et il a par conséquent des capacités de transmission dédiées aux communications.

Le second type de canal est apte à transmettre les données pures. Et à travers ce canal, les données pures sont transmises aux terminaux des abonnés.

Mais cette solution ne résout pas le problème d'une transmission optimisée de données volumineuses en fonction de l'intérêt des abonnés à recevoir de telles données car il faut utiliser un canal de second type pour chacun des abonnés.

L'invention a pour but de proposer une solution à ce problème par un procédé de diffusion d'informations volumineuses vers un ensemble de terminaux en fonction de profils prédéfinis des abonnés.

Les informations peuvent être du son, des images et/ou du texte associé à l'image et au son.

L'invention propose également un système de diffusion pour permettre une utilisation optimisée de la capacité de transmission et des ressources du réseau.

L'invention, à cet effet, concerne, un procédé de diffusion, dans un réseau de radiocommunication, d'au moins une information à au moins un terminal de radiocommunication, ledit réseau comprenant un serveur et au moins deux types différents de canaux de transmission,
caractérisé en ce que l'information est répartie en une partie dite personnelle dédiée au terminal donné et une autre partie dite commune à tous les terminaux, abonnés audit réseau,
ladite information étant transmise sur deux types de canaux de transmission de données, le premier type de canal étant dédié à la partie dite personnelle de l'information, le deuxième type de canal étant dédié à la partie dite commune de l'information.
Ainsi, grâce à ce procédé de diffusion, la capacité de transmission du réseau de radiocommunication est optimisée et la partie personnelle des informations n'est envoyée qu'à un terminal donné.
De plus, la partie commune de l'information n'est pas envoyée sur autant de canaux que d'abonnés destinataires mais seulement un canal par groupe d'abonnés intéressés par cette partie commune.

L'invention se rapporte également à un système pour diffuser au moins une information à au moins un terminal de radiocommunication, ledit système comprenant un serveur, situé dans un réseau de radiocommunication comprenant au moins deux types différents de canaux de transmission, une base de données utilisateur comprenant les profils des utilisateurs des terminaux et une base de données commune à tous les utilisateurs de terminaux, caractérisé en ce que ladite information est divisée en une partie dite personnelle dédiée à un terminal donné et une autre partie dite commune à tous les terminaux, ladite base de données utilisateur servant à construire la partie personnelle de l'information et ladite base de données commune comprenant des données de contenu multimédia communes à tous les utilisateurs des terminaux, ledit serveur ayant des moyens pour accéder aux bases de données utilisateur et commune et des moyens pour transmettre ces données à un terminal donné, sur les canaux de transmission de données de types différents

D'autres caractéristiques et avantages de l'invention apparaîtront à la lecture de la description suivante d'un mode de réalisation particulier de l'invention, donné à titre illustratif et pas limitatif, et des dessins énoncés ci-dessous.

Dans la suite de la description, l'invention est décrite dans son application aux radiotéléphones ou téléphones portables. Elle s'applique plus généralement à tous types d'émetteurs-récepteurs radio, tels que, par exemple, un appareil de radiomessagerie ou un assistant personnel numérique (personnal digital assistant ou PDA en anglais).
La figure 1 représente un schéma du réseau de radiocommunication pour diffuser des informations selon l'invention.
La figure 2 représente un fichier contenant la partie personnelle de l'information diffusée à un terminal selon l'invention.
La figure 3 représente deux trames transportant la partie commune de l'information selon l'invention.

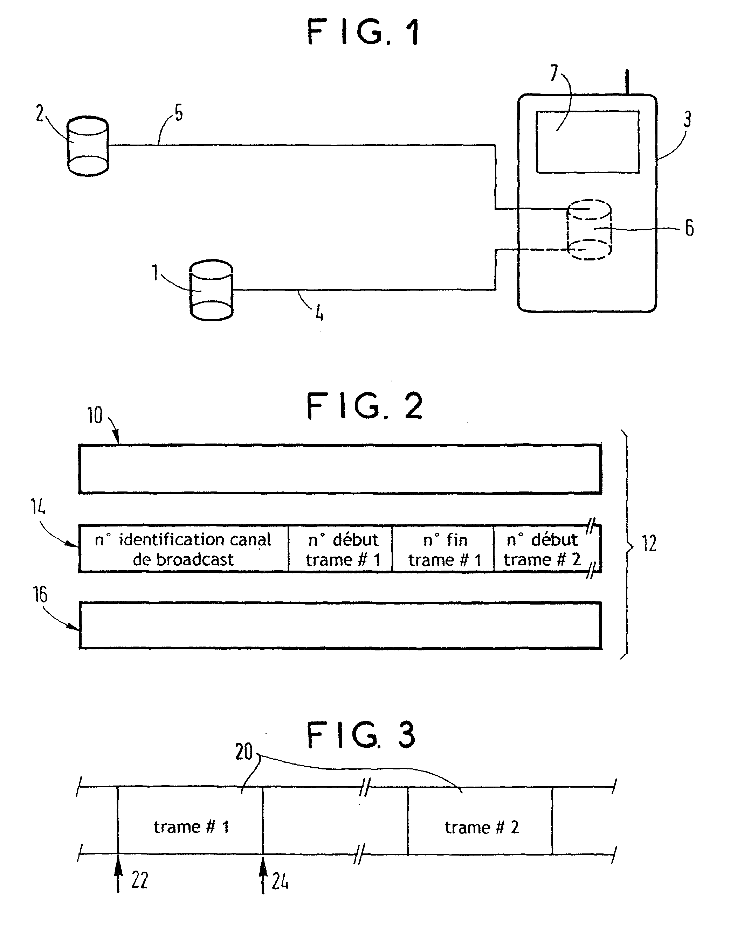

En référence à la figure 1, Le système de diffusion selon l'invention comprend un serveur comprenant deux bases de données différentes.

Une première base de données 1 est une base définissant un profil d'utilisateur pour chacun des terminaux 3 situés dans le réseau. Le profil peut contenir par exemple les thèmes préférés de l'utilisateur, son type de terminal, la communauté à laquelle il appartient.

Une deuxième base de données 2 est une base de contenu multimédia où sont stockées des données à caractère multimédia telles que des textes, des images, des films.

Le réseau comprend également deux canaux 4,5 de transfert d'information.

Comme illustré en figure 2 et 3, l'information à transmettre à au moins un terminal 3 est répartie en une partie dite personnelle 10 dédiée à un terminal donné et une autre partie dite commune 20 à tous les terminaux.

La partie personnelle 10 est stockée dans la base de données de type personnelle 1 et la partie commune 20 dans la base de données de type commune 2.

La partie dite personnelle 10 est transmise par le premier canal 4 alloué à un utilisateur donné d'un terminal 3 donné. Ainsi, l'utilisateur du terminal 3 sera le seul à recevoir cette partie personnelle de l'information.

La partie commune 20 est transmise par le deuxième canal 5, dit canal de broadcast (ou canal de diffusion, en français).

Selon un mode de réalisation, Le terminal 3 reçoit la partie personnelle de l'information 10 et va chercher auprès du serveur la partie commune de l'information 20.

Selon un autre mode de réalisation, le terminal 3 peut aussi recevoir les deux parties de l'information 10, 20 directement envoyées par le serveur.

Le serveur met en forme la partie personnelle de l'information 10 dans un méta fichier 12 comme indiqué en figure 2.

Puis, le serveur transmet au terminal 3 la partie personnelle de l'information 10 au sein du méta fichier 12.

Le méta fichier 12 comprend donc la partie personnelle de l'information 10, un pointeur 14 et des informations de synchronisation 16.

Le pointeur 14 comprend :
le numéro d'identification du canal de broadcast 4 utilisé pour transmettre la partie commune de l'information destinée à être reçue par le terminal 3,
le numéro de début et de fin de la trame, décrite en figure 3, transportant la partie commune de l'information 20. Cette trame identifie dans le temps un bloc de données envoyé dans le réseau géré par le système de transmission de données dit TDMA (Time Division Multiple Access en anglais, accès multiple par répartition de temps), système bien connu de l'homme du métier.

Chaque trame transportée par le canal 4 est constituée d'un numéro de trame départ 22 indiquant le début de la trame et d'un numéro de trame fin 24 indiquant la fin de la trame, donc la fin du bloc de données à transmettre.

La partie commune de l'information 20 peut être constituée de plusieurs trames trame#1, trame#2 si elle est par exemple trop volumineuse pour être transportée dans une seule trame ou si elle est composée de différentes images ou portion de vidéo.

Le méta fichier 12 peut également inclure plusieurs pointeurs 14 dans le cas où la partie commune de l'information 20 serait constituée de plusieurs blocs de données de type différent tels que de l'image, du son et du texte par exemple.

Les informations de synchronisation 16 permettent au terminal 3 qui va recevoir le méta fichier 12 de synchroniser la partie personnelle de l'information 10 avec sa partie commune 20.

Ces informations de synchronisation 16 permettent de synchroniser par exemple du texte représentant la partie personnelle de l'information 10 avec des images et du son représentant la partie commune de l'information 20.

Le procédé de synchronisation comprenant ces informations est du type HTML (Hyper Text Markup Language en anglais, ou langage adapté aux données de service pour Internet) ou du type SMIL (Synchronized Multimedia Integration Language, langage intégré de synchronisation multimédia), connu de l'art antérieur.

Dans le mode de réalisation où le terminal 3 doit aller chercher la partie commune de l'information 20 auprès du réseau, le terminal 3 comprend un microprocesseur (non représenté) spécifique. Ce microprocesseur spécifique commande un sélecteur de canal de broadcast et choisit le canal approprié, les numéros de trame départ 22 et fin 24.

Le terminal va chercher la partie commune de l'information 20 et constitue une troisième base de données 6 pour synchroniser la partie personnelle 10 et la partie commune 20 de l'information.

Cette base de données 6 est soit embarquée dans le terminal, soit, dans un autre mode de réalisation, se trouve sur le réseau dans le cas où, par exemple, l'information reconstituée aurait une taille qui excède les capacités de mémorisation et de traitement du terminal 3.

Une fois les deux parties de l'information 10, 20 synchronisées dans la base de données, l'information reconstituée est alors présentée à l'utilisateur du terminal 3 sur un écran d'affichage 7 et éventuellement d'autres organes du terminal 3 tels que par exemple le haut-parleur.

Ainsi, l'information reconstituée est divisée en groupes de données de taille gérable par le terminal 3. Le terminal 3 va chercher dans cette base de données 6 chaque groupe de données et les présente au fur à et à mesure à l'utilisateur du terminal 3. Ce procédé est généralement appelé streaming (accrochage de données au fur et à mesure des besoins) de données multimédia.

Nous allons maintenant décrire un exemple d'application de l'un des modes de réalisation de l'invention.

La base de données de contenu multimédia 2 est une base thématique sportive.

Cette base comprend des vidéos de différents match entre deux clubs de football, par exemple X et Y.

La base de données 1 définissant le profil de l'utilisateur du terminal 3 comprend des rubriques énonçant les centres d'intérêts de l'utilisateur et toutes les données strictement personnelles.

Par exemple, l'opérateur qui gère le réseau veut envoyer les derniers buts du match X-Y à tous les supporters des deux équipes et en même temps une publicité pour Soda, une boisson.

L' utilisateur du terminal 3 est supporter de l'équipe X et veut avoir toutes les informations possibles sur M. Z, joueur de cette équipe, cet utilisateur s'appelle M. Suportaire.

Le réseau crée un méta fichier 12 en utilisant la base de données 1.

Ce méta fichier comprend :
- la partie dite personnelle 10 de l'information à diffuser au terminal 3 (par exemple la phrase « Cher M. Suportaire, voici le but de M. Z » avec le sonal publicitaire préféré de cet utilisateur,
- un pointeur 14 comprenant le numéro d'identification du canal de broadcast 4 utilisé pour transmettre la partie commune de l'information 20 destinée à être reçue par le terminal 3 (par exemple canal 123, par lequel est envoyé la vidéo du dernier match X - Y) ; le numéro de début et de fin de la trame, décrite en figure 3, transportant la partie commune de l'information 20 (par emple, entre les octets 821 et 821821 où se trouve le but de M. Zidane),
- les informations de synchronisation 16 permettent au terminal 3 qui va recevoir le méta fichier 12 de synchroniser la partie personnelle de l'information 10 avec sa partie commune 20.

Le méta fichier 12 est reçu par le terminal 3.

Le terminal 3 doit requérir la partie commune de l'information 20 auprès du réseau : un des ses microprocesseurs commande un sélecteur de canal de broadcast, choisit le canal approprié (canal 123), et les numéros de trame départ 22 et fin 24 (821 et 821821), puis le terminal va chercher la partie commune de l'information 20 et constitue une troisième base de données 6 pour synchroniser la partie personnelle 10 et la partie commune 20 de l'information.

Le terminal 3 présente à M. Suportaire l'écran ci-dessous :

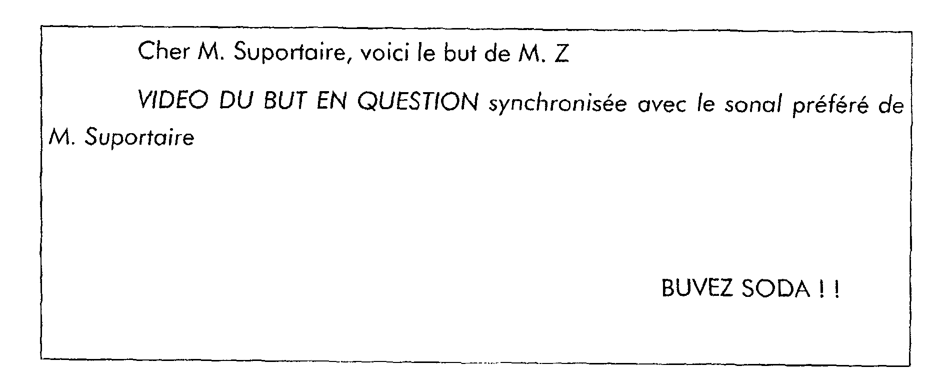

## Revendications

1. Procédé de diffusion, dans un réseau de radiocommunication, d'au moins une information à au moins un terminal de radiocommunication (3), ledit réseau comprenant un serveur et au moins deux types différents de canaux de transmission (4, 5),
**caractérisé en ce que** l'information est répartie en une partie dite personnelle (10) dédiée au terminal donné et une autre partie dite commune (20) à tous les terminaux abonnés audit réseau,
ladite information étant transmise sur deux types de canaux de transmission de données (4,5), le premier type de canal (4) étant dédié à la partie dite personnelle de l'information (10), le deuxième type de canal (5) étant dédié à la partie dite commune de l'information (20).

2. Procédé de diffusion selon la revendication 1, **caractérisé en ce qu'**il comprend:
• Une étape de stockage de données définissant un profil d'utilisateur pour chacun des terminaux (3) abonnés audit réseau sur une première base de données (1),
• Une étape de stockage de données de contenu sur une deuxième base de données (2),
lesdites données de profil d'utilisateur représentant la partie de l'information dite personnelle (10) et lesdites données de contenu multimédia représentant la partie de l'information dite commune (20).

3. Procédé de diffusion selon l'une quelconque des revendications 1 ou 2, **caractérisé en ce que** les terminaux (3) reçoivent la partie dite personnelle de l'information (10) et requièrent auprès du serveur du réseau la partie dite commune de l'information (20).

4. Procédé de diffusion selon l'une quelconque des revendications 1 ou 2, **caractérisé en ce que** les terminaux (3) reçoivent du serveur du réseau simultanément la partie dite personnelle de l'information (10) et la partie dite commune de l'information (20).

5. Procédé de diffusion selon l'une quelconque des revendications 1 à 4, **caractérisé en ce que** le terminal (3) synchronise ladite partie personnelle (10) et ladite partie commune (20) et les présente à l'utilisateur.

6. Procédé de diffusion selon l'une quelconque des revendications 1 à 5, **caractérisé en ce que** le terminal (3) constitue une troisième base de données (6) pour associer ladite partie personnelle (10) et ladite partie commune (20) de l'information.

7. Procédé de diffusion selon la revendication 6, **caractérisé en ce que** ladite troisième base de données (6) pour associer ladite partie personnelle (10) et ladite partie commune (20) de l'information se trouve soit dans le réseau, soit embarquée dans le terminal (3).

8. Procédé de diffusion selon l'une quelconque des revendications 1 à 7, **caractérisé en ce que** ledit deuxième type de canal (5) est un canal de broadcast.

9. Procédé de diffusion selon l'une quelconque des revendications 7 ou 8, **caractérisé en ce que** le terminal (3) comprend un microprocesseur qui commande un sélecteur de canal de broadcast lui permettant de choisir parmi tous les canaux de broadcast du réseau celui sur lequel il trouvera ladite partie commune (20).

10. Système de diffusion d'au moins une information à au moins un terminal (3) de radiocommunication, ledit système comprenant un serveur, situé dans un réseau de radiocommunication comprenant au moins deux types différents de canaux de transmission (4, 5), une base de données utilisateur (1) comprenant les profils des utilisateurs des terminaux (3) et une base de données commune (2) à tous les utilisateurs de terminaux (3),
**caractérisé en ce que** ladite information est divisée en une partie dite personnelle (10) dédiée à un terminal donné et une autre partie dite commune (20) à tous les terminaux (3), ladite base de données utilisateur (1) servant à construire la partie personnelle (10) de l'information et ladite base de données commune (2) comprenant des données de contenu multimédia communes (20) à tous les utilisateurs des terminaux (3), ledit serveur ayant des moyens pour accéder aux bases de données utilisateur (1) et commune (2) via, respectivement, un premier canal (4) et un deuxième canal (5) et des moyens pour transmettre ces données à un terminal donné (3), sur les canaux de transmission de données (4, 5) de types différents.

11. Terminal de radiocommunication apte à fonctionner dans un réseau de radiocommunication comprenant au moins deux types différents de canaux de transmission de données (4, 5), **caractérisé en ce qu'**il comprend des moyens pour analyser des premières données dites personnelles (10) en provenance du premier canal (4), des moyens pour extraire desdites données personnelles (10) une donnée spécifique lui permettant d'aller chercher sur le deuxième canal (5) des deuxièmes données dites communes (20) à tous les terminaux (3), des moyens pour associer les premières (10) et deuxièmes (20) données et des moyens pour les présenter à l'utilisateur du terminal (3).

## Patentansprüche

1. Verfahren zum Versenden mindestens einer Information an mindestens ein Funkkommunikations-Endgerät (3) in einem Funkkommunikationsnetz, wobei besagtes Netz einen Server und mindestens zwei verschiedene Typen von Übertragungskanälen (4, 5) beinhaltet,
**dadurch gekennzeichnet, daß** die Information in einen Anteil (10), der als individuelle Information bezeichnet wird und für das vorgegebene Endgerät bestimmt ist, und in einen anderen Anteil (20), der als allen Teilnehmerendgeräten im besagten Netz gemeinsamer Anteil bezeichnet wird, unterteilt wird,
wobei die besagte Information auf zwei Typen von Datenübertragungskanälen (4, 5) übertragen wird, von denen der erste Kanaltyp (4) dem als individuell bezeichneten Anteil (10) und der zweite Kanaltyp (5) dem als gemeinsam bezeichneten Anteil (20) der Information zugewiesen ist.

2. Sendeverfahren gemäß Anspruch 1, **dadurch gekennzeichnet, daß** dieses
• einen Schritt zur Speicherung von Daten, die ein Benutzerprofil für jedes der im Netz befindlichen Endgeräte (3) definieren, in einer ersten Datenbank (1) und
• einen Schritt zur Speicherung von Inhaltsdaten in einer zweiten Datenbank (2) beinhaltet,
wobei die besagten Benutzerprofildaten den als individuell bezeichneten Anteil (10) der Information und die besagten Multimedia-Inhaltsdaten den als gemeinsam bezeichneten Anteil (20) der Information repräsentieren.

3. Sendeverfahren gemäß einem oder mehreren der Ansprüche 1 oder 2, **dadurch gekennzeichnet, daß** die Endgeräte (3) den als individuell bezeichneten Anteil (10) der Information empfangen und beim Netzserver den als gemeinsam bezeichneten Anteil (20) der Information anfordern.

4. Sendeverfahren gemäß einem der Ansprüche 1 oder 2 oder beiden, **dadurch gekennzeichnet, daß** die Endgeräte (3) vom Netzserver gleichzeitig den als individuell bezeichneten Anteil (10) der Information und den als gemeinsam bezeichneten Anteil (20) der Information empfangen.

5. Sendeverfahren gemäß einem oder mehreren der Ansprüche 1 bis 4, **dadurch gekennzeichnet, daß** das Endgerät (3) den besagten individuellen Anteil (10) und den besagten gemeinsamen Anteil (20) miteinander synchronisiert und sie dem Benutzer präsentiert.

6. Sendeverfahren gemäß einem oder mehreren der Ansprüche 1 bis 5, **dadurch gekennzeichnet, daß** das Endgerät (3) eine dritte Datenbank (6) anlegt, um den besagten individuellen Anteil (10) und den besagten gemeinsamen Anteil (20) der Information einander zuzuordnen.

7. Sendeverfahren gemäß Anspruch 6, **dadurch gekennzeichnet, daß** sich die besagte dritte Datenbank (6) zur Zuordnung des besagten individuellen Anteils (10) und des besagten gemeinsamen Anteils (20) der Information entweder im Netz befindet oder im Endgerät (3) integriert ist.

8. Sendeverfahren gemäß einem oder mehreren der Ansprüche 1 bis 7, **dadurch gekennzeichnet, daß** der besagte zweite Kanaltyp (5) ein Rundsendekanal ist.

9. Sendeverfahren gemäß einem der Ansprüche 7 oder 8 oder beiden, **dadurch gekennzeichnet, daß** das Endgerät (3) einen Mikroprozessor beinhaltet, der eine Rundsendekanal-Auswahlvorrichtung so ansteuert, daß er aus allen Rundsendekanälen denjenigen auswählen kann, auf welchem er den besagten gemeinsamen Anteil (20) findet.

10. System zum Versenden mindestens einer Information an mindestens ein Funkkommunikations-Endgerät (3), wobei das besagte System einen Server beinhaltet, der in einem Funkkommunikationsnetz mit mindestens zwei verschiedenen Typen von Übertragungskanälen (4, 5) angeordnet ist, ferner eine Benutzerdatenbank (1), welche die Profile der Benutzer der Endgeräte (3) enthält, sowie eine Datenbank (2), welche allen Benutzern der Endgeräte (3) gemeinsam ist,
**dadurch gekennzeichnet, daß** die besagte Information in einen Anteil (10), der als individuell bezeichnet wird und für ein vorgegebenes Endgerät bestimmt ist, und in einen anderen Anteil (20), der als allen Endgeräten (3) gemeinsam bezeichnet wird, unterteilt wird, wobei die besagte Benutzerdatenbank (1) dazu dient, den individuellen Anteil (10) der Information zu erstellen und die besagte gemeinsame Datenbank (2) Daten (20) mit Multimedia-Inhalten beinhaltet, welche allen Benutzern der Endgeräte (3) gemeinsam sind, wobei der besagte Server über Mittel verfügt, um über einen ersten Kanal (4) beziehungsweise einen zweiten Kanal (5) auf die Benutzerdatenbank (1) und die gemeinsame Datenbank (2) zuzugreifen, und ferner über Mittel verfügt, um diese Daten über die Datenübertragungskanäle (4, 5) unterschiedlicher Typen an ein vorgegebenes Endgerät (3) zu übertragen.

11. Funkkommunikations-Endgerät, welches für den Betrieb in einem Funkkommunikationsnetz geeignet ist, beinhaltend mindestens zwei unterschiedliche Typen von Datenübertragungskanälen (4, 5), **dadurch gekennzeichnet, daß** es Mittel beinhaltet, um erste Daten zu analysieren, die als individuelle Daten (10) bezeichnet werden und vom ersten Kanal (4) kommen, ferner Mittel, um aus den besagten individuellen Daten (10) bestimmte Daten zu extrahieren, welche es ihm gestatten, über den zweiten Kanal (5) zweite Daten (20) abzurufen, die als allen Endgeräten (3) gemeinsame Daten bezeichnet werden, sowie Mittel, um die ersten Daten (10) und die zweiten Daten (20) einander zuzuordnen, und Mittel, um sie dem Benutzer der Endgeräts (3) zu präsentieren.

## Claims

1. Method of broadcasting, in a radio communication network, at least one item of information to at least one radio communication terminal (3), said network comprising a server and at least two different types of transmission channel (4, 5),
**characterized in that** the item of information is divided into a so-called personal part (10) dedicated to the given terminal and another so-called common part (20) common to all the terminals subscribed to said network,
said item of information being transmitted over two types of data transmission channel (4, 5), the first type of channel (4) being dedicated to the so-called personal part (10) of the information, the second type of channel (5) being dedicated to the so-called common part (20) of the information.

2. Broadcasting method according to claim 1, **characterized in that** it comprises:
• a step for storing data defining a user profile for each of the terminals (3) subscribed to said network on a first database (1),
• a step of storing content data on a second database (2), said user profile data representing the part of the information called personal (10) and said multimedia content data representing the part of the information called common (20).

3. Broadcasting method according to either one of claims 1 and 2, **characterized in that** the terminals (3) receive the so-called personal part (10) of the information and request from the network server the so-called common part (20) of the information.

4. Broadcasting method according to either one of claims 1 and 2, **characterized in that** the terminals (3) simultaneously receive from the network server the so-called personal part (10) of the information and the so-called common part (20) of the information.

5. Broadcasting method according to any one of claims 1 to 4, **characterized in that** the terminal (3) synchronizes said personal part (10) and said common part (20) and presents them to the user.

6. Broadcasting method according to any one of claims 1 to 5, **characterized in that** the terminal (3) generates a third database (6) for linking said personal part (10) and said common part (20) of the information together.

7. Broadcasting method according to claim 6, **characterized in that** said third database (6) for linking said personal part (10) and said common part (20) of the information together is either in the network, or on board the terminal (3).

8. Broadcasting method according to any one of claims 1 to 7, **characterized in that** said second type of channel (5) is a broadcast channel.

9. Broadcasting method according to either one of claims 7 and 8, **characterized in that** the terminal (3) comprises a microprocessor which controls a broadcast channel selector allowing it to choose from all the broadcast channels of the network the one on which it will find said common part (20).

10. System for broadcasting at least one item of information to at least one radio communication terminal (3), said system comprising a server, situated in a radio communication network comprising at least two different types of transmission channel (4, 5), a user database (1) comprising the profiles of the users of the terminals (3) and a database common (2) to all the users of terminals (3),
**characterized in that** said information is divided into a so-called personal part (10) dedicated to a given terminal and another so-called common part (20) common to all the terminals (3), said user database (1) being used to construct the personal part (10) of the information and said common database (2) comprising multimedia content data (20) common to all the users of the terminals (3), said server having means for accessing the user database (1) and common database (2) via, respectively, a first channel (4) and a second channel (5) and means for transmitting these data to a given terminal (3), over the different types of data transmission channel (4, 5).

11. Radio communication terminal capable of operating in a radio communication network comprising at least two different types of data transmission channel (4, 5), **characterized in that** it comprises means for analyzing first so-called personal data (10) originating from the first channel (4), means for extracting from said personal data (10) a specific item of data allowing it to go and fetch from the second channel (5) the second so-called common (20) data common to all the terminals (3), means for linking the first (10) and second (20) data together and means for presenting them to the user of the terminal (3).
